(19) **Europäisches Patentamt / European Patent Office / Office européen des brevets**

(11) **EP 4 742 804 A1**

(12) # EUROPEAN PATENT APPLICATION
published in accordance with Art. 153(4) EPC

(43) Date of publication:
**13.05.2026 Bulletin 2026/20**

(21) Application number: **24851936.5**

(22) Date of filing: **08.08.2024**

(51) International Patent Classification (IPC):
**H04W 72/54** (2023.01)    **H04W 16/26** (2009.01)
**H04W 72/0453** (2023.01)

(52) Cooperative Patent Classification (CPC):
**H04W 16/26; H04W 72/0453; H04W 72/54**

(86) International application number:
**PCT/JP2024/028547**

(87) International publication number:
**WO 2025/033519 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 JP 2023131051**

(71) Applicant: **TOYOTA JIDOSHA KABUSHIKI KAISHA**
**Toyota-Shi,**
**Aichi-Ken 471-8571 (JP)**

(72) Inventor: **TAKIZAWA Kenichi**
**Koganei-shi, Tokyo 184-8795 (JP)**

(74) Representative: **Simmons & Simmons**
**City Point**
**One Ropemaker Street**
**London EC2Y 9SS (GB)**

(54) **CONTROL DEVICE, RELAY STATION, AND CONTROL METHOD**

(57) To appropriately perform communication in a case where non-regenerative relay is used. A control apparatus according to an aspect of the present disclosure includes: a control unit that selects a first frequency resource and a second frequency resource from frequency resource candidates to minimize interference with communication using a third frequency resource between a base station and a second terminal station in a case where uplink non-regenerative relay communication from a relay station to the base station is performed on the first frequency resource and downlink non-regenerative relay communication from the relay station to a first terminal station is performed on the second frequency resource; and a communication unit that transmits information related to the selected first frequency resource to the relay station and transmits information related to the selected second frequency resource to the first terminal station.

FIG. 7

**Description**

Technical Field

The present disclosure relates to a control apparatus, a relay station, and a control method in a mobile communication system.

Background Art

In regard to a New Radio (NR) technical specification in the 3rd Generation Partnership Project (3GPP (registered trademark)) which is a mobile communication system standardization project, non-regenerative relay has been introduced as a low-delay relay technology (for example, Non Patent Literature 1). In the non-regenerative relay, it is possible to perform relay with a low delay since demodulation and decoding are not performed in relay stations.

Citation List

Non Patent Literature

Non Patent Literature 1: 3GPP TS 38.106 V18.1.0(2023-06)

Summary of Invention

Technical Problem

However, in a case where non-regenerative relay is performed, there is a concern that terminal stations that do not use relay may be interfered with by the non-regenerative relay, which may lead to degradation of communication quality or a decrease in communication throughput.
Therefore, one of objects of the present disclosure is to provide a control apparatus, a relay station, and a control method enabling appropriate communication in a case where non-regenerative relay is used.

Solution to Problem

A control apparatus according to an aspect of the present disclosure includes: a control unit that selects a first frequency resource and a second frequency resource from frequency resource candidates to minimize interference with communication using a third frequency resource between a base station and a second terminal station in a case where uplink non-regenerative relay communication from a relay station to the base station is performed on the first frequency resource and downlink non-regenerative relay communication from the relay station to a first terminal station is performed on the second frequency resource; and a communication unit that transmits information related to the selected first frequency resource to the relay station and transmits information related to the selected second frequency resource to the first terminal station.

Advantageous Effects of Invention

According to an aspect of the present disclosure, communication can be appropriately performed in a case where non-regenerative relay is used.

Brief Description of Drawings

Fig. 1 is a diagram illustrating an example of a schematic configuration of a system according to an embodiment of the present disclosure.
Fig. 2 is a diagram illustrating an example of a schematic functional configuration of each apparatus according to an embodiment of the present disclosure.
Fig. 3 is a diagram illustrating an example of a hardware configuration of each apparatus according to an embodiment of the present disclosure.
Figs. 4A and 4B are diagrams illustrating an example of a variation of a hardware configuration of a base station according to an embodiment of the present disclosure.

Figs. 5A to 5D are diagrams illustrating an example of a problem related to non-regenerative relay.

Figs. 6A and 6B are diagrams illustrating an example of a case where interference related to the non-regenerative relay becomes problematic and a case where the interference does not become problematic.

Fig. 7 is a diagram illustrating an example of a first control sequence of relay frequency selection according to an embodiment of the present disclosure.

Fig. 8 is a diagram illustrating an example of a value of $D_R(\Delta f)$.

Fig. 9 is a diagram illustrating an example of a second control sequence according to an embodiment of the present disclosure.

Description of Embodiments

Hereinafter, embodiments of the present disclosure will be described in detail with reference to the drawings. Note that in the present specification and the drawings, elements that can be similarly described will be denoted by the same reference numerals, and repeated description may thus be omitted.

In the present disclosure, "A/B" and "at least one of A and B" may be interchangeably read. Furthermore, in the present disclosure, "A/B/C" may mean "at least one of A, B, and C".

<Configuration of System>

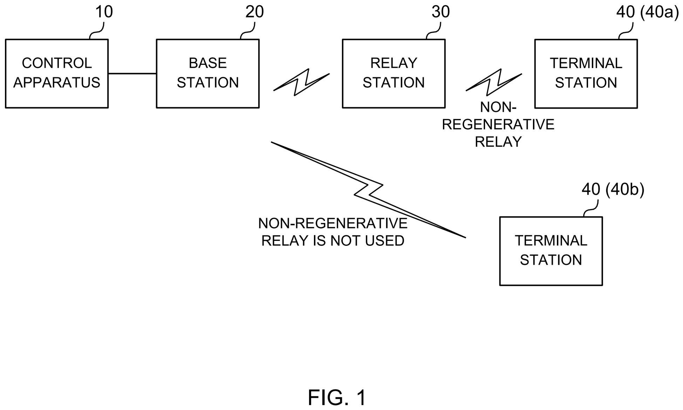

Fig. 1 is a diagram illustrating an example of a schematic configuration of a system according to an embodiment of the present disclosure. A system 1 includes a control apparatus 10, a base station 20, a relay station 30, and a terminal station 40. The system 1 may be referred to as a wireless communication system, an information communication system, a control system, or the like.

For example, the system 1 is a system conforming to the 3GPP technical specifications (TS). More specifically, the system 1 is a system conforming to the TS of 5th generation mobile communication system (5G) or New Radio (NR), for example.

Note that the system 1 is not limited to this example and may include systems using Long Term Evolution (LTE), LTE-Advanced (LTE-A), 4th generation mobile communication system (4G), 5th generation mobile communication system (5G), 6th generation mobile communication system (6G), xth generation mobile communication system(xG (x is, for example, an integer or a decimal)), New Radio (NR), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other wireless communication methods, and next-generation systems extended, modified, created, or defined based on these systems.

In the system 1, a communication link directed (received) to the base station 20/outgoing from the terminal station 40 (transmitted) may be referred to as an uplink (UL), and a communication link outgoing (transmitted) from the base station 20/directed (received) to the terminal station 40 may be referred to as a downlink (DL).

The control apparatus 10 may be an apparatus on a core network to which the base station 20 is connected. The control apparatus 10 may be referred to as a network node and may provide network functions (NFs). The NFs may be, for example, at least one of an access and mobility management function (AMF), an application function (AF), a data network (DN), a location management function (LMF), an operation, administration, and maintenance (management) (OAM), a session management function (SMF), unified data management (UDM), a user plane function (UPF), and the like.

The core network includes, for example, an optical fiber network. In the present disclosure, the network and the core network may be interchangeably read.

The control apparatus 10 may control at least one of the base station 20, the relay station 30, and the terminal station 40 to perform control for providing a communication service between the base station 20/the relay station 30 and the terminal station 40. Note that the control apparatus 10 may be included in the base station 20.

The base station 20 provides a radio access network (RAN) to the terminal station 40. An area in which wireless communication is possible in the radio access network is also referred to as a cell. The base station 20 is, for example, a gNB. The gNB is a node that provides NR user plane and control plane protocol terminations towards user equipment (UE) and is connected to a 5G core network (5GC) via an NG interface. The base station 100 may be an en-gNB. The en-gNB is a node that provides NR user plane and control plane protocol terminations towards the UE and operates as a secondary node in the E-UTRA-NR Dual Connectivity (EN-DC).

The relay station 30 performs non-regenerative relay for communication between the base station 20 and the terminal station 40. In the non-regenerative relay, since relayed signal is not demodulated/decoded, communication can be relayed with a delay that does not change a slot timing. In the present disclosure, the non-regenerative relay may mean relay (transfer) that is not accompanied by demodulation/decoding processing, amplification and transfer of a UL/DL radio signal between the base station and the terminal station, repeat, and the like. Note that in the present disclosure, relay, transfer, repeat, transmission, and the like may be interchangeably read.

The relay station 30 may be a radio frequency (RF) repeater, a network-controlled repeater (NCR), an integrated access and backhaul (IAB), or another repeater. The relay station 30 may be referred to as, for example, a small base station, a mobile base station, a relay base station, or the like.

For example, the NCR may include NCR-mobile termination (NCR-MT) and NCR-forwarding (NCR-Fwd). The NCR-MT can communicate with (for example, receive configuration/control information from and send a request/report to) the base station 20 via a control link. The NCR-Fwd can relay communication between the base station 20 and the terminal station 40 by performing relay/amplification from a backhaul link (with the base station 20) to an access link (with the terminal station 40) and relay/amplification from the access link to the backhaul link.

The relay station 30 may perform non-regenerative relay for a plurality of terminal stations 40 using different frequency resources, or may perform non-regenerative relay using the same frequency resource. The relay station 30 may transmit non-regenerative relay signals to the plurality of terminal stations 40 using frequency division multiplexing (FDM), time division multiplexing (TDM), space division multiplexing (SDM), or other multiplexing methods.

One or more relay stations 30 may share information regarding resources (for example, frequency/time resources, resource blocks (RBs)) used by each terminal station 40. A notification of the information may be provided between the relay stations 30 or may be provided from the base station 20 to the relay stations 30.

Each terminal station 40 is connected to the radio access network in the above-described cell and corresponds to the UE. The terminal station 40 may be, for example, a portable terminal (mobile communication terminal) such as a smartphone, a tablet terminal, or a wearable terminal, or may be a fixed communication terminal. Each terminal station 40 may be able to directly receive a control signal transmitted by the base station 20 or may be able to receive the control signal via the relay station 30.

In the present disclosure, a terminal station to which non-regenerative relay communication is applied (in other words, a terminal station that communicates with the base station 20 via the relay station 30) will also be referred to as a terminal station 40a, and a terminal station to which non-regenerative relay communication is not applied (in other words, a terminal station that communicates with the base station 20 without intervention of the relay station 30) will also be referred to as a terminal station 40b. In a case where the simple description of terminal stations 40 is used, both the terminal station 40a and the terminal station 40b may be included. The terminal station that is a non-regenerative relay target (terminal station 40a) may be referred to as a first terminal station. The terminal station that is not a non-regenerative relay target (terminal station 40b) may be referred to as a second terminal station.

Note that each of the base station 20, the relay stations 30, the terminal stations 40, and the like may include a fixed station that is installed at a fixed installation location and may include a mobile station.

The non-regenerative relay signal in DL communication may correspond to a signal transmitted from the relay station 30 to each terminal station 40. The non-regenerative relay signal in UL communication may correspond to a signal transmitted from the relay station 30 to the base station 20.

Note that TDM or time division duplex (TDD) that performs UL communication and DL communication in the same frequency channel may be used in the system 1. In the system 1, slot/frame timings may be synchronized (aligned) among all the stations in the system 1.

In the system 1, cyclic prefix-orthogonal frequency division multiplexing (CP-OFDM) (or multicarrier waveform) may be used or discrete Fourier transform-spread-orthogonal frequency division multiplexing (DFT-s-OFDM) (or single-carrier waveform) may be used for at least either the UL communication or the DL communication. In the system 1, other waveforms (for example, filtered OFDM (F-OFDM)) may be used for UL/DL communication.

<Configuration of Each Apparatus>

An example of a configuration of each apparatus (the control apparatus 10, the base station 20, the relay station 30, and the terminal station 40) according to the embodiment of the present disclosure will be described.

(Functional Configuration)

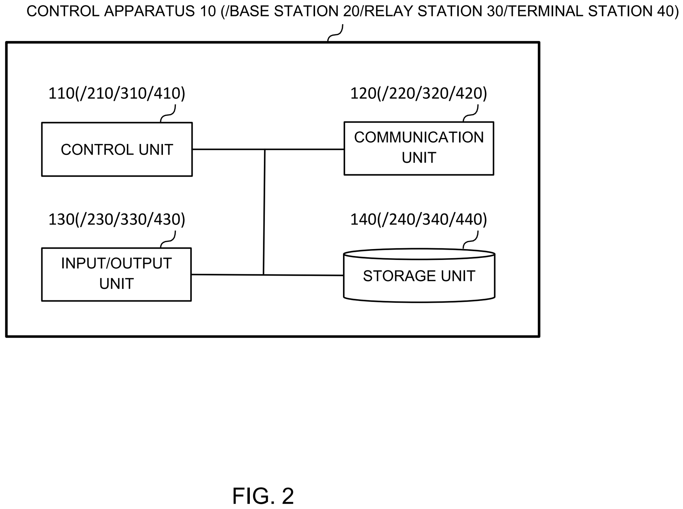

Fig. 2 is a diagram illustrating an example of a schematic functional configuration of each apparatus according to an embodiment of the present disclosure. For example, the control apparatus 10 includes a control unit 110, a communication unit 120, an input/output unit 130, and a storage unit 140.

Note that the base station 20, the relay station 30, and the terminal station 40 may have similar functional configurations. For this reason, Fig. 2 also illustrates, as a reference sign for a functional block corresponding to each apparatus, a reference sign obtained by replacing the number of the highest-order digit of the reference sign indicating each apparatus (for example, "2" that is the highest-order digit of "20" in the case of the base station 20) with "1". Although functional blocks related to the control apparatus 10 will be described below, it will be understood that other apparatuses can also be similarly described.

In this example, functional blocks of characteristic parts in the present embodiment are mainly illustrated, and each apparatus may also have other functional blocks necessary for other processing. In addition, a configuration not including some of the functional blocks may be adopted.

The control unit 110 controls the control apparatus 10 and provides various functions. For example, the control unit 110 may control communication with other apparatuses via the communication unit 120. Furthermore, the control unit 110 may acquire information necessary for processing based on information received via the communication unit 120. The control unit 110 may be referred to as a processing unit.

The communication unit 120 performs communication (transmission/reception) with other apparatuses via a network. The communication unit 120 may output information obtained from a received signal to the control unit 110, or may convert information input from the control unit 110 into a signal and transmit the signal. The communication unit 120 may be referred to as a transmission unit, a reception unit, a transmission/reception unit, or the like.

The input/output unit 130 may include an input unit that receives an input by a user's operation. The input unit may be connected to a given apparatus, a storage medium, or the like and receive an input of data. The input unit may output an input result to, for example, the control unit 110.

Furthermore, the input/output unit 130 may include an output unit that outputs data, content, and the like in a format perceptible to the user. The output unit may be configured to include a display unit that displays an image, a sound output unit that outputs sound, and the like.

The storage unit 140 stores (holds) various kinds of information to be used for processing by the control apparatus 10. The control unit 110 may provide an instruction to read or write data to the storage unit 140.

(Hardware Configuration)

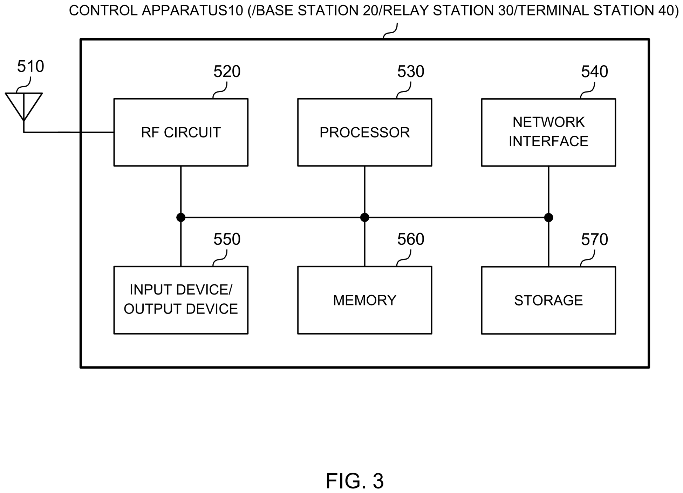

Fig. 3 is a diagram illustrating an example of a schematic hardware configuration of each apparatus according to an embodiment of the present disclosure. Each apparatus includes an antenna 510, a radio frequency (RF) circuit 520, a processor 530, a network interface 540, an input apparatus/output apparatus 550, a memory 560, and a storage 570.

Note that the hardware configuration of each apparatus may include one or more of the elements illustrated in Fig. 3 or may not include some of the elements. For example, the relay station 30 and the terminal station 40 may not have the network interface 540.

The antenna 510 converts a signal into a radio wave and emits the radio wave into space. Furthermore, the antenna 510 receives a radio wave in space and converts the radio wave into a signal. The antenna 510 may include a transmission antenna and a reception antenna or may include a single antenna for transmission and reception. The antenna 510 may include a directional antenna or may include a plurality of antenna elements.

A plurality of antennas 510 may be mounted. For example, the relay station 30 may have an antenna independent of an antenna used for a relay line in order for the control unit 310 to receive a notification related to control.

The RF circuit 520 performs analog processing of signals transmitted and received via the antenna 510. The RF circuit 520 may include a filter (for example, a high-frequency filter and a low-pass filter), an amplifier, a modulator, a frequency synthesizer, an analog-to-digital conversion circuit, a digital-to-analog conversion circuit, an inverse fast Fourier transform (IFFT) processing circuit, and the like.

The RF circuit 520 may perform amplification, filtering, demodulation into a baseband signal, and the like on the received signal of a radio frequency band, and output the signal to the processor 530. The RF circuit 520 may perform modulation to a radio frequency band, filtering, amplification, and the like on a baseband signal input from the processor 530, and transmit a signal in the radio frequency band via the transmission/reception antenna 510. Note that the RF circuit 520 may perform physical layer processing (for example, processing of lower functions of a physical layer) or may perform beamforming processing such as analog beamforming processing and digital beamforming processing.

The processor 530 may control the entire apparatus. The processor 530 may read a program (program code), software (software module), data, and the like from the storage 570 to the memory 560, and execute various kinds of processing according thereto. The processor 530 may be configured by a central processing unit (CPU) including an interface with a peripheral apparatus, a control apparatus, an arithmetic operation apparatus, a register, and the like. In addition, the processor 530 may include a microprocessor, a digital signal processor (DSP), an application specific integrated circuit (ASIC), a programmable logic apparatus (PLD), a field programmable gate array (FPGA), and the like.

The processor 530 may perform digital processing on signals transmitted and received via the antenna 510 and the RF circuit 520. The digital processing may include processing of a physical layer (for example, processing of upper functions of the physical layer), processing of a medium access control (MAC) layer or higher layers, and processing such as modulation, demodulation, encoding, decoding, and scrambling. The processor 530 also processes signals transmitted and received via the network interface 540.

The processor 530 may include a plurality of processors or may be a single processor. The plurality of processors may include a baseband processor that performs the digital processing and one or more processors that perform other processing (for example, overall control).

The network interface 540 is, for example, a network adapter, and may be connected to an external network in a wired manner to transmit and receive signals.

Note that the RF circuit 520/baseband processor/network interface 540 may have an integrated configuration. The RF circuit 520/baseband processor/network interface 540 may be referred to as a network controller, a network card, a communications module, or the like.

The input apparatus/output apparatus 550 includes an input apparatus (for example, a keyboard, a mouse, a microphone, a switch, a button, a sensor, and the like) that receives an input from the outside, an output apparatus (for example, a display, a speaker, a light emitting diode (LED) lamp, and the like) that performs output to the outside, an apparatus (for example, a touch panel) in which these are integrated, and the like.

The memory 560 is a computer-readable non-transitory recording medium, and stores a program to be executed by the processor 530, parameters related to the program, and various other kinds of information. The memory 560 may include at least one of a read only memory (ROM), an erasable programmable read only memory (EPROM), an electrically erasable programmable read only memory (EEPROM), a random access memory (RAM), and a flash memory. An entirety or part of the memory 560 may be included in the processor 530. The memory 560 may be referred to as a register, a cache, a main memory (main storage apparatus), or the like.

The storage 570 is a computer-readable non-transitory recording medium and stores various kinds of information. The storage 570 may include, for example, at least one of a flexible disk, a floppy (registered trademark) disk, a magneto-optical disk (for example, a compact disc ROM (CD-ROM), a digital versatile disc, or a Blu-ray (registered trademark) disc), a removable disk, a hard disc drive (HDD), a smart card, a flash memory apparatus (for example, a solid state drive (SSD)), and the like. The storage 570 may be referred to as an auxiliary storage apparatus.

In addition, each of the apparatuses including the processor 530 and the memory 560 may be connected by a bus for communicating information. A single bus may be used within each apparatus, or each different bus may be used between the apparatuses.

A control unit X10 (X = 1, 2, 3, 4; the same applies to the following description) may be implemented by the processor 530. A communication unit X20 may be implemented by the antenna 510/RF circuit 520/network interface 540. An input/output unit X30 may be implemented by the input apparatus/output apparatus 550. A storage unit X40 may be implemented by the memory 560/storage 570.

(Variations in Hardware Configuration of Base Station)

The communication processing functions of the base station (RAN) may be separated into three elements, namely a radio unit (RU), a distributed unit (DU), and a central unit (CU). The RU implements lower functions of RF processing and the physical layer. The DU implements upper functions of the physical layer, functions of a MAC layer, and functions of a radio link control (RLC) layer. The CU implements functions of a packet data convergence protocol (PDCP) layer, a service data adaptation protocol (SDAP) layer, and a radio resource control (RRC) layer.

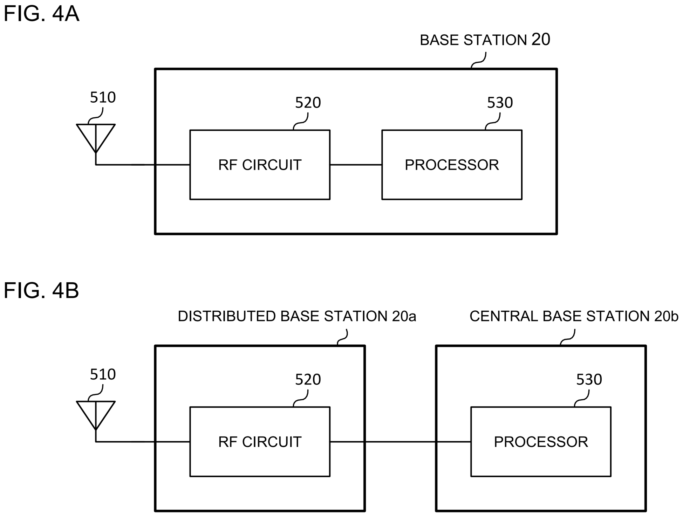

Figs. 4A and 4B are diagrams illustrating an example of the variations of a hardware configuration of the base station according to an embodiment of the present disclosure. Although only the antenna 510, the RF circuit 520, and the processor 530 are illustrated from among the elements described in Fig. 3 for simplicity in this example, the other elements may be included in an apparatus in which the processor 530 is included.

In Fig. 4A, one base station 20 includes an antenna 510, an RF circuit 520, and a processor 530. The base station 20 has a configuration in which an RU and a DU/CU are integrated.

In Fig. 4B, one base station 20a includes only an antenna 510 and an RF circuit 520, another base station 20b includes a processor 530, and these base stations are connected by an optical fiber line or the like. Since the former base station 20a has only the RU, the base station 20a may be referred to as a slave station, a distributed base station, or the like. Since the latter base station 20b has only the DU/CU, the base station 20b may be referred to as a master station, a central base station, or the like.

Note that a base station of the RU/DU and a base station of the CU may be connected, or a base station of the RU, a base station of the DU, and a base station of the CU may be connected.

In the present disclosure, the base station 20 may include one base station (node) that implements all the functions of the RU, the DU, and the CU as illustrated in Fig. 4A, or may include a plurality of base stations (nodes), each of which implements some of the functions of the RU, the DU, and the CU as illustrated in Fig. 4B. For example, the base station 20 may mean a base station constituted by the distributed base station 20a and the central base station 20b.

<Problem Analysis>

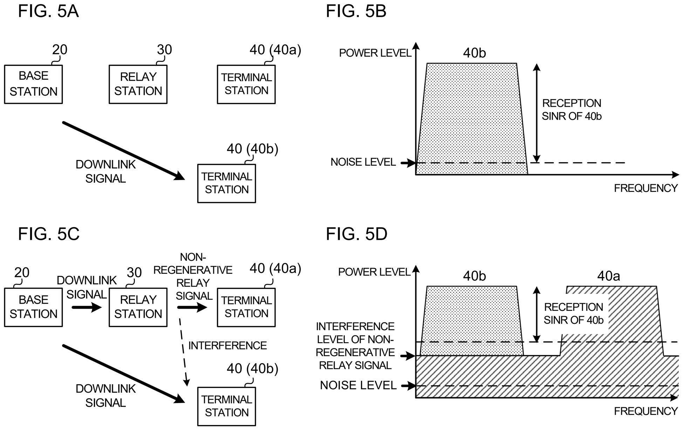

Figs. 5A to 5D are diagrams illustrating an example of problems related to non-regenerative relay. Figs. 5A and 5C correspond to diagrams extracting parts of Fig. 1. Note that in this example, it is assumed that a frequency resource of a signal transmitted from the base station 20 to the terminal station 40b and a frequency resource of a non-regenerative relay signal transmitted from the relay station 30 to the terminal station 40a deviate from each other (or do not overlap).

A reception signal-to-interference plus noise power ratio (SINR) of the terminal station 40b is obtained by the ratio (= P/(I + N)) of an interference power level I and a noise level N to a power level P of the reception signal of the terminal station 40. Note that in the present disclosure, the unit of each level may be decibel-milliwatts (dBm), dB, or the like.

In a case where the relay station 30 is not performing non-regenerative relay (or does not exist in the first place) in the system 1 as in Fig. 5A, there is no interference received by the terminal station 40b, and the reception SINR of the terminal station 40b thus becomes as illustrated in Fig. 5B.

On the other hand, in a case where the relay station 30 is performing non-regenerative relay in the system 1 as illustrated in Fig. 5C, not only a relayed signal but also unnecessary signals such as noise are amplified in the non-regenerative relay in the DL, for example, interference occurs due to the non-regenerative relay signal in a frequency region outside the frequency resource of the non-regenerative relay signal for the terminal station 40a as illustrated in Fig. 5D. Therefore, the reception SINR of the terminal station 40b in Fig. 5C is smaller than that in the case of Fig. 5A.

As described above, there is a concern that the terminal station 40b that does not use a relay may be interfered with by the non-regenerative relay using the relay station 30, communication quality thereof may be degraded, and the communication throughput thereof may be degraded.

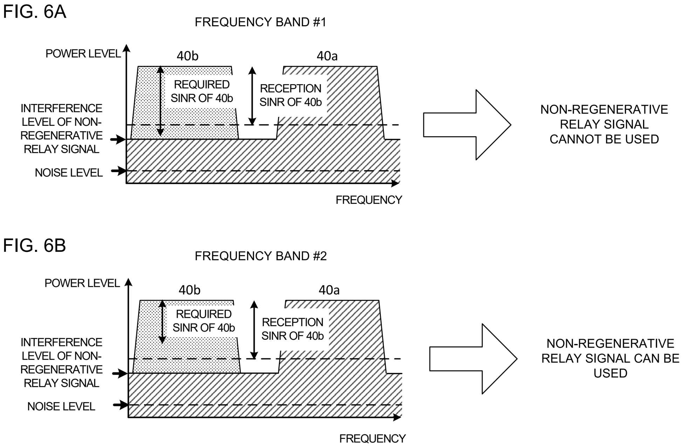

On the other hand, the present inventor has focused on the fact that the interference of the non-regenerative relay can be suppressed within an allowable range depending on a frequency resource used for the relay. Figs. 6A and 6B are diagrams illustrating an example of a case where interference related to the non-regenerative relay becomes problematic and a case where the interference does not become problematic. Although this example is similar to Fig. 5D, they are different in that a required SINR of 40b is indicated, and a frequency band at which the non-regenerative relay is performed is indicated. Note that the required SINR may correspond to an SINR suitable for (or minimum necessary for) communication and may be referred to as an allowable SINR or the like.

In Fig. 6A, the required SINR of the terminal station 40b in the frequency band #1 is relatively large, and the required SINR is larger than the reception SINR of the terminal station 40b that has been interfered with by the non-regenerative relay. In this case, since communication quality of the terminal station 40b cannot be secured if the non-regenerative relay is performed, it is preferable not to perform the non-regenerative relay in the frequency band #1.

In Fig. 6B, the required SINR of the terminal station 40b in the frequency band #2 is relatively small, and the required SINR is smaller than the reception SINR of the terminal station 40b that has been interfered with by the non-regenerative relay. In this case, since communication quality of the terminal station 40b can be secured even if the non-regenerative relay is performed, the non-regenerative relay may be performed in the frequency band #2.

In view of the above circumstances, the present inventor has found a method for simply calculating the amount of interference by employing minimization of interference with communication performed at the same timing while maintaining communication quality of a non-regenerative relay line as a standard for frequency selection after the non-regenerative relay.

\<Operation Example\>

Hereinafter, an example of operations of each apparatus according to the embodiment of the present disclosure will be described. The communication method (a wireless communication method and a control method) described below may be applied to the above-described system 1.

Note that in the following description of the present disclosure, reference numerals may be omitted. For example, the control apparatus in the following description may mean the control apparatus 10.

In the following description/drawings, a base station may be abbreviated as BS, a relay station may be abbreviated as R, a terminal station that is a non-regenerative relay target may be abbreviated as UE(R), and a terminal station that is not a non-regenerative relay target may be abbreviated as UE. In addition, parameters related to reception (reception signals) may be indicated by adding a subscript "$_{RX}$". In addition, parameters related to transmission (transmission signals) may be indicated by adding a subscript "$_{TX}$".

Also, parameters at the time of reception (/transmission) of the apparatus X may be indicated by adding a subscript "$_{X,RX(/TX)}$". In addition, parameters for signals transmitted from an apparatus Y to an apparatus Z may be indicated by adding a superscript "$^{Y \rightarrow Z}$" or a subscript "$_{Y \rightarrow Z}$". Furthermore, parameters depending on a resource block b may be indicated by adding "(b)". For example, $P_{R,RX}^{UE \rightarrow R}(b)$ means reception power (for example, RSRP) in the relay station R of a signal transmitted from the terminal station UE to the relay station R using the resource block b.

Each apparatus in the following description may be interchangeably read with one or more functional blocks (for example, the control unit 110 and the communication unit 120) or hardware configurations (for example, the RF circuit 520 and the processor 530) in the apparatus.

In an embodiment of the present disclosure, whether or not the relay station 30 functions as a relay station (performs non-regenerative relay) for a certain terminal station 40 may be selected by the control apparatus 10/base station 20/relay station 30. The relay station 30 may perform the non-regenerative relay in a semi-fixed/semi-permanent manner. Note that the relay station 30 may stop the non-regenerative relay in a case where there is an instruction to stop the non-regenerative relay from the base station 20/control apparatus 10, or in a case where a certain time has elapsed since the start of the non-regenerative relay or from a specific timing. Note that the stop may be interchangeably read with completion, end, and the like.

(First Control Sequence)

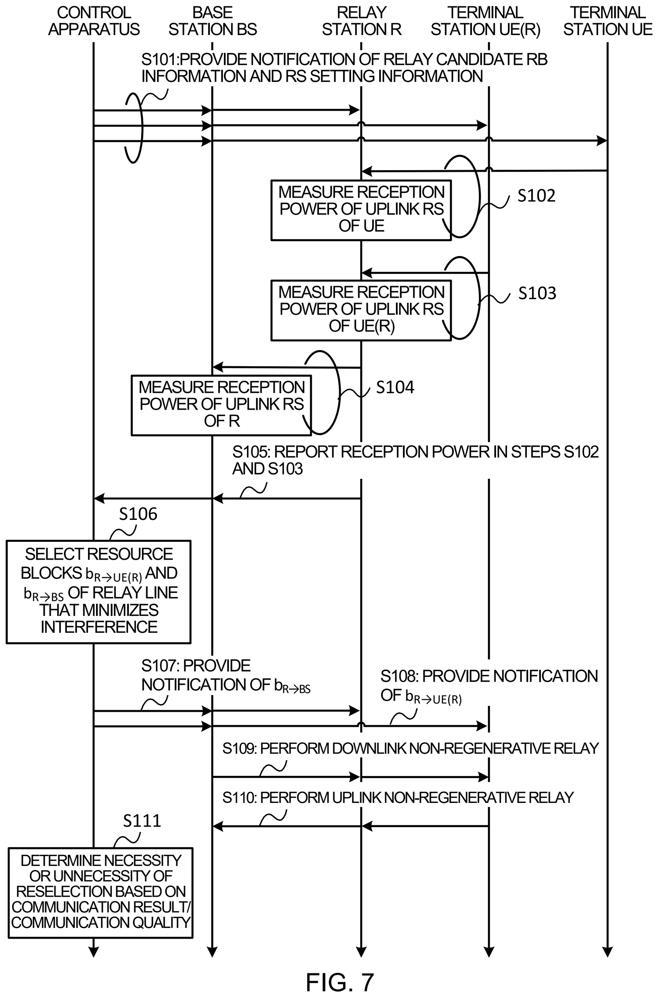

Fig. 7 is a diagram illustrating an example of a first control sequence of relay frequency selection according to an embodiment of the present disclosure. In the first control sequence, the control apparatus selects (determines) a relay frequency (relay frequency resource) of the non-regenerative relay. Note that in the present disclosure, some of the illustrated steps may be omitted, or the order in which the steps are performed may be changed.

In Step S101, the control apparatus notifies the relay station R, the terminal station UE(R), and the terminal station UE of RB information/RS setting information via the base station BS.

The RB information provided as a notification to the relay station R and the terminal station UE(R) may be information indicating $b_R(b_R \in B_R)$ which is each candidate RB included in $B_R$ which is a set of relay candidate RBs. The RS setting information provided as a notification to the relay station R and the terminal station UE(R) may include information such as an RS transmission timing (a cycle and a time offset from a certain timing, for example) in each $b_R$.

The RB information provided as a notification to the terminal station UE may be information indicating $b(b \neq \forall b_R)$ which is an arbitrary RB different from all of $b_R$ included in $B_R$. The RS setting information provided as a notification to the terminal station UE may include information regarding an RS transmission timing at b. Note that the terminal station UE may not be notified of the RS setting information.

Here, b, $b_R$, and the like correspond to one or more RBs. Each $b/b_R$ may have the same number of RBs or different numbers of RBs. In addition, a certain $b_R$ and another $b_R$ may partially overlap each other in frequency resources, or may not entirely overlap each other.

Note that the RS setting information may include relay candidate RB information, or vice versa, or the RS setting information and the relay candidate RB information may be provided through a notification as different information.

Furthermore, the RB information/RS setting information provided as a notification to the terminal station UE(R) and the UE may also be provided as a notification to the relay station R. In this case, the relay station R can appropriately receive the RS transmitted from the terminal station UE(R) and the UE.

In Step S102, the terminal station UE may transmit an uplink reference signal (UL-RS) in b at the transmission timing designated by the notification. The relay station R may measure $P_{R,RX}^{UE \to R}(b)$ which is reception power (RSRP) based on the UL-RS. Note that the relay station R may receive a UL signal (not limited to the UL-RS) transmitted in b used by the terminal station UE and measure $P_{R,RX}^{UE \to R}(b)$. For example, the strongest or average reception power in measurement for a certain period of time may be derived as $P_{R,RX}^{UE \to R}(b)$.

In Step S103, the terminal station UE(R) transmits the UL-RS in each $b_R$ at the transmission timing designated by the notification. The relay station R measures $P_{R,RX}^{UE(R) \to R}(b_R)$ which is reception power (RSRP) based on the UL-RS.

In Step S104, the relay station transmits the UL-RS in each $b_R$ at the transmission timing designated by the notification. The base station BS measures $P_{BS,RX}^{R \to BS}(b_R)$ which is reception power (RSRP) based on the UL-RS.

In Step S105, the relay station R reports information related to measured $P_{R,RX}^{UE \to R}(b)$ and each $P_{R,RX}^{UE(R) \to R}(b_R)$ to the base station BS. Note that this report may be performed simultaneously with the transmission of the UL-RS in Step S104. In addition, the base station BS notifies the control apparatus of information related to measured $P_{R,RX}^{UE \to R}(b)$, each $P_{R,RX}^{UE(R) \to R}(b_R)$, and $P_{BS,RX}^{R \to BS}(b_R)$.

In Step S106, the control apparatus selects resource blocks $b_{R \to UE(R)}$ and $b_{R \to BS}$ of the relay line that minimizes interference with other terminal stations UE having the same communication timing. A specific selection method will be described later in detail. In a case where the selection cannot be made (appropriate $b_{R \to UE(R)}$ and $b_{R \to BS}$ are not found), the control apparatus may reallocate the set of relay candidate RBs (determine another set) and return to Step S101.

Note that although minimizing interference may mean that there is no interference in the present disclosure, it may mean that a combination with the smallest interference is found in a case where $b_{R \to UE(R)}$ and $b_{R \to BS}$ are selected from $B_R$ that is a relay candidate RB set.

In Step S107, the control apparatus notifies the relay station R of $b_{R \to BS}$ via the base station BS.

In Step S108, the control apparatus notifies the terminal station UE(R) of $b_{R-UE(R)}$ via the base station BS.

In Step S109, the relay station R performs the non-regenerative relay of the downlink line using $b_{R \to UE(R)}$.

In Step S110, the relay station R performs the non-regenerative relay of the uplink line using $b_{R \to BS}$.

In Step S111, the control apparatus determines necessity or unnecessity of reselection based on a communication result/communication quality of the non-regenerative relay acquired via the base station BS. In a case where the reception SINR of the downlink is equal to or less than a required value, or in a case where the report of the communication result at the time of non-regenerative relay in the downlink indicates a failure, for example, the control apparatus may determine that reselection is necessary, and may return to Step S102 (alternatively, reallocate the set of the relay candidate RBs and return to Step S101).

In a case where the reception SINR of the uplink is equal to or less than a required value, or in a case where the report of the communication result at the time of non-regenerative relay in the uplink indicates a failure, for example, the control apparatus may determine that reselection is necessary, and may return to Step S102 (alternatively, reallocate the set of the relay candidate RBs and return to Step S101).

Note that the fact that the report of the communication result at the time of non-regenerative relay in the downlink indicates a failure may be indicated, for example, by the fact that delivery confirmation information (for example, hybrid automatic repeat request acknowledgement (HARQ-ACK)) from the terminal station UE(R) for downlink data transmission (for example, a physical downlink shared channel (PDSCH)) indicates negative ACK (NACK).

In a case where it is determined in Step S111 that reselection is unnecessary, the non-regenerative relay in Step S109/S110 may be continued.

[Method for Selecting Resource Blocks $b_{R \to UE(R)}$ and $b_{R \to BS}$ of Relay Line]

In Step S106 described above, the control apparatus may select $b_{R \to BS}$ and $b_{R \to UE(R)}$ from the set $B_R$ of relay RB candidates such that a sum ($I_{total}$) of $I_{UL}(b_{R \to BS})$ that is interference by the uplink (received by the base station BS) non-regenerative relay signal and $I_{DL}(b_{R \to UE(R)})$ that is interference by the downlink (received by the terminal station UE(R)) non-regenerative relay signal is minimized. This selection may be performed, for example, by the Equations 1 and 2 below.

[Math. 1]

$$\arg \min_{b_{BS \to R}, b_{R \to UE(R)} \in \boldsymbol{B_R}} I_{total}(b_{R \to BS}, b_{R \to UE(R)}) \ldots \text{(Equation 1)}$$

$$\text{where: } I_{total}(b_{R \to BS}, b_{R \to UE(R)}) = I_{UL}(b_{R \to BS}) + I_{DL}(b_{R \to UE(R)})$$
$$= \sum_{b=0, b \neq b_{R \to BS}}^{N_{RB}(b)-1} i_{R \to BS}(b | b_{R \to BS}) + \sum_{b=0, b \neq b_{R \to UE(R)}}^{N_{RB}(b)-1} i_{R \to UE}(b | b_{R \to UE(R)}) \ldots \text{(Equation 2)}$$

$N_{RB}(b)$ indicates the number of RBs of b.

Note that in the optimization problem of Equation 1, there is a constraint condition (restriction) that the non-regenerative relay line is established. Specifically, the restriction is that, in the non-regenerative relay line, $\gamma_{UE(R) \to BS}(b_{R \to BS}, b_{R \to UE(R)})$, which is the uplink reception SINR, satisfies a required value $\gamma_{UE(R) \to BS, REQ}$, and $\gamma_{BS \to UE(R)}(b_{BS \to R}, b_{R \to UE(R)})$, which is the downlink reception SINR, satisfies the required value $\gamma_{BS \to UE(R), REQ}$. In other words, $\gamma_{UE(R) \to BS}(b_{R \to BS}, B_{R \to UE(R)}) \geq \gamma_{UE(R) \to BS, REQ}$ and $\gamma_{BS \to UE(R)}(b_{BS \to R}, B_{R \to UE(R)}) \geq \gamma_{BS \to UE(R), REQ}$. A method of calculating these parameters will be described later.

Note that in a case where it is assumed that RBs used for the non-regenerative relay are the same between BS→R and R→UE(R), a constraint of $b_{BS \to R} = b_{R \to UE(R)}$ is further added.

In Equation 2, $i_{R \to BS}(b | b_{R-BS})$, which is interference by an uplink non-regenerative relay signal given to b, and $i_{R \to US}(b | b_{R \to UE(R)})$, which is interference by a downlink non-regenerative relay signal given to b, may be expressed by Equations 3 and 4, respectively.

[Math. 2]

$$i_{R \to BS}(b|b_{R \to BS})$$

$$= P_{TX}^{R}(b_{R \to BS}) + D_R\big(\Delta f(b, b_{R \to BS})\big) - L_{R \to BS}(b_{R \to BS})$$

$$= P_{BS,RX}^{R \to BS}(b_{R \to BS}) + D_R\big(\Delta f(b, b_{R \to BS})\big) \ldots \text{(Equation 3)}$$

$$i_{R \to UE}\big(b|b_{R \to UE(R)}\big)$$

$$= P_{TX}^{R}\big(b_{R \to UE(R)}\big) + D_R\left(\Delta f\big(b, b_{R \to UE(R)}\big)\right) - L_{R \to UE}\big(b_{R \to UE(R)}\big)$$

$$= P_{UE,RX}^{R \to UE}\big(b_{R \to UE(R)}\big) + D_R\left(\Delta f\big(b, b_{R \to UE(R)}\big)\right)$$

$$= P_{R,RX}^{UE \to R}\big(b_{R \to UE(R)}\big) + \Delta P_{TX}^{UE,R} + D_R\left(\Delta f\big(b, b_{R \to UE(R)}\big)\right)$$

$$\approx P_{R,RX}^{UE \to R}(b) + \Delta P_{TX}^{UE,R} + D_R\left(\Delta f\big(b, b_{R \to UE(R)}\big)\right) \ldots \text{(Equation 4)}$$

Here, $P_{TX}^{R}(b_{R \to BS})$ is transmission power of $b_{R \to BS}$ in the relay station R, $P_{BS,RX}^{R \to BS}(b_{R \to BS})$ is reception power of $b_{R \to BS}$ in the base station BS, $L_{R \to BS}(b_{R \to BS})$ is a propagation loss from the relay station R to the base station BS, and $P_{BS,RX}^{R \to BS} = P_{TX}^{R}(b_{R \to BS}) - L_{R \to BS}(b_{R \to BS})$.

Furthermore, $P_{TX}^{R}(_{R \to UE(R)})$ is transmission power of $b_{R \to UE(R)}$ in the relay station R, $P_{UE,RX}^{R \to UE}(b_{R \to UE(R)})$ is reception power of the $b_{R \to UE(R)}$ in the terminal station UE, $L_{R \to UE}(b_{R \to UE(R)})$ is a propagation loss from the relay station R to the terminal station UE, and $P_{UE,RX}^{R \to UE}(b_{R \to UE(R)}) = P_{TX}^{R}(b_{R \to UE(R)}) - L_{R \to UE}(b_{R \to UE(R)})$.

Note that in Equation 4, approximation of $P_{R,RX}^{UE \to R}(b) \approx P_{R,RX}^{UE \to R}(b_{R \to UE(R)})$ is used. This may correspond to a sufficiently high correlation of radio wave propagation characteristics between b and $b_{R \to UE(R)}$. Note that the sufficiently high correlation may mean that the correlation is higher than a threshold value, and the threshold value may be determined in advance by a standard, or may be provided as a notification from another apparatus (for example, the base station, or a node of the NF), or may be determined based on its own capability. For example, when a neighboring subcarrier of b is used as $b_{R \to UE(R)}$, it may be assumed that the correlation is sufficiently high.

Since $P_{BS,RX}^{R \to BS}(b_R)$ is derived in Step S104, $P_{BS,RX}^{R \to BS}(b_{R \to BS})$ is also derived. $D_R(\Delta f)$ is a reference value as will be described later and can thus be easily derived.

$P_{R,RX}^{UE \to R}(b)$ is derived in Step S102. $\Delta P_{TX}^{UE,R}$ is a transmission power difference ($= P_{TX}^{R} - P_{TX}^{UE}$) between the relay station R and the terminal station UE. The control apparatus may grasp $P_{TX}^{R}$ and $P_{TX}^{UE}$ in advance, or $P_{TX}^{R}$ and $P_{TX}^{UE}$ may be reported from the relay station R and the terminal station UE, respectively, and the control apparatus can calculate $\Delta P_{TX}^{UE,R}$. Also, since $D_R(\Delta f)$ is a reference value as will be described later, the control apparatus can easily derive $D_R(\Delta f)$.

$D_R(\Delta f)$ is a value (a relative value of interference power, an interference level) obtained from a specific spectrum mask of the non-regenerative relay signal. The control apparatus may determine that the above-described specific spectrum mask is a representative spectrum mask or may make determination based on a report of a measurement result from the terminal station UE(R).

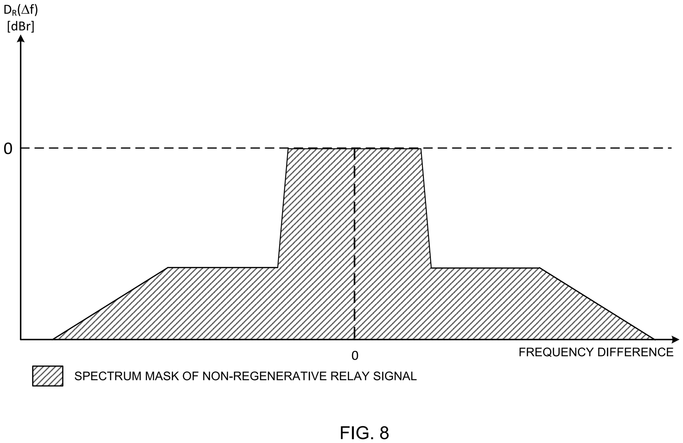

Fig. 8 is a diagram illustrating an example of a value of $D_R(\Delta f)$. The value of the transmission spectrum mask of the non-regenerative relay signal varies depending on the frequency. This is because the power of the non-regenerative relay signal becomes weaker as the non-regenerative relay signal is further separated from the frequency resource used for the non-regenerative relay. $D_R(\Delta f)$ may indicate how much the power of the non-regenerative relay signal becomes weaker depending on the frequency.

When a frequency difference between a certain resource block b and a resource block $b_{R \to UE(R)}$ used for the non-regenerative relay is assumed to be $\Delta f(b, b_{R \to UE(R)})$, $\Delta f(b, b_{R \to UE(R)}) = f_c(b) - f_c(b_{R \to UE(R)})$ may be obtained. Here, $f_c(b)$ is the center frequency of the resource block b, and $f_c(b_{R \to UE(R)})$ is the center frequency of the resource block $b_{R \to UE(R)}$.

Fig. 8 illustrates $D_R(\Delta f) = D_R(\Delta f(b, b_{R \to UE(R)}))$, and $D_R(\Delta f(b_{R \to UE(R)}, b_{R \to UE(R)})) = D_R(O) = 0$ is satisfied.

$D_R(\Delta f(b, b_{R \to BS}))$ may be similarly considered. Note that $D_R(\Delta f(b, b_{R \to BS}))$ may be the same as or different from $D_R(\Delta f(b, b_{R \to UE(R)}))$.

[Parameters of Restriction]

Now, $\gamma_{BS \to UE(R)}(b_{BS \to R}, b_{R \to UE(R)})$ and $\gamma_{UE(R) \to BS}(b_{R \to BS}, b_{R \to UE(R)})$, which are restrictions of the optimization problem of Equation 1 described above, may be obtained by the following equations, respectively.

[Math. 3]

$$\gamma_{BS \to UE(R)}(b_{BS \to R}, b_{R \to UE(R)}) = \min(\gamma_{BS \to R}(b_{BS \to R}), \gamma_{R \to UE(R)}(b_{R \to UE(R)})) \ldots \text{(Equation 5)}$$

$$\text{where: } \gamma_{BS \to R}(b_{BS \to R}) = P_{BS,RX}^{R \to BS}(b_{BS \to R}) - P_{R,N}$$

$$\gamma_{R \to UE(R)}(b_{R \to UE(R)}) = P_{R,RX}^{UE(R) \to R}(b_{R \to UE(R)}) - \Delta P_{TX}^{UE(R),R} - P_{UE(R),N}$$

$$\gamma_{UE(R) \to BS}(b_{R \to BS}, b_{R \to UE(R)}) \approx \gamma_{BS \to UE(R)}(b_{BS \to R}, b_{R \to UE(R)}) \ldots \text{(Equation 6)}$$

Values that have not appeared in the above explanation include $P_{R,N}$, $P_{UE(R),N}$, and $\Delta P_{TX}^{UE,R}$. $P_{R,N}$ is noise power of the relay station R. $P_{UE(R),N}$ is noise power of the terminal station UE (R) . The control apparatus may determine that $P_{R,N}$ and $P_{UE(R),N}$ are representative (or specific) noise power or may make determination based on reports of measurement results from the relay station R and the terminal station UE(R). $P_{R,N}$ and $P_{UE(R),N}$ may be determined in advance in the standard.

$\Delta P_{TX}^{UE(R),R}$ is a transmission power difference (= $P_{TX}^{R}$ - $P_{TX}^{UE(R)}$) between the relay station R and the terminal station UE(R). The control apparatus may grasp $P_{TX}^{R}$ and $P_{TX}^{UE(R)}$ in advance, or $P_{TX}^{R}$ and $P_{TX}^{UE(R)}$ may be reported from the relay station R and the terminal station UE(R), respectively, and the control apparatus can calculate $\Delta P_{TX}^{UE(R),R}$

Equation 6 corresponds to calculating $\gamma_{UE(R)-BS}(b_{R \to BS}, b_{R \to UE(R)})$ as $\gamma_{BS \to UE(R)}(b_{BS \to R}, b_{R \to UE(R)})$, which is an approximate equation.

In addition, the required values $\gamma_{UE(R) \to BS,REQ}$ and $\gamma_{BS \to UE(R),REQ}$ are threshold values for restriction and may be referred to as required SINRs. The required SINR may be determined based on at least one of the location of the terminal station UE(R), assumed reception signal quality of assumed reception signal power of the terminal station UE(R), modulation and coding scheme (MCS) that can be used by the base station BS to communicate with the terminal station UE(R), and the like.

The MCS that can be used may be an MCS corresponding to a specific (for example, a maximum or minimum) or desired coding rate that can be indicated for the terminal station UE(R) using downlink control information (DCI) for a physical downlink shared channel (PDSCH) for $\gamma_{BS \to UE(R),REQ}$.

The MCS that can be used may be an MCS corresponding to a specific (for example, a maximum or minimum) or desired coding rate that can be indicated for the terminal station UE(R) using DCI for a physical uplink shared channel (PUSCH) for $\gamma_{UE(R) \to BS,REQ}$.

According to the first control sequence described above, the control apparatus can suitably select the relay frequency of the non-regenerative relay in consideration of interference with other terminal stations caused by the non-regenerative relay to a certain terminal station.

(Second Control Sequence)

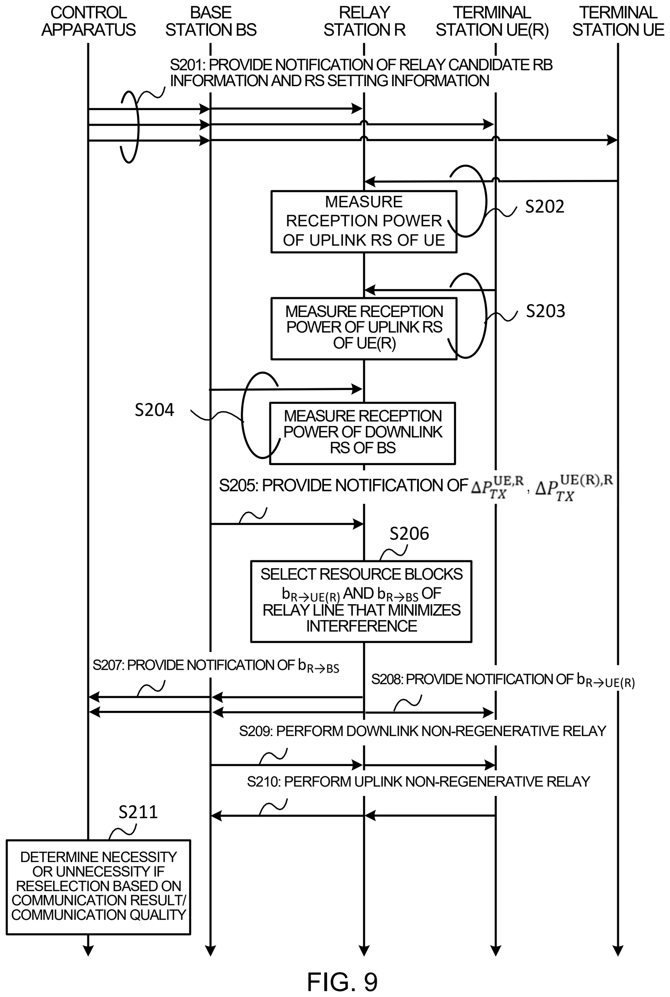

Fig. 9 is a diagram illustrating an example of a second control sequence according to an embodiment of the present disclosure. The second control sequence is different from the first control sequence in that the relay station selects a relay frequency (relay frequency resource) of non-regenerative relay. Hereinafter, steps that may be similar to those in the first control sequence will not be described repeatedly. For example, Steps S201 to S203 and S209 to S211 may be the same as Steps S101 to S103 and S109 to S111, respectively.

Note that RS setting information provided as a notification to the relay station R in Step S201 may include information regarding RS reception timing of the base station BS in each $b_R$. Furthermore, the RS setting information may also be received by the base station BS, and the base station may treat the RS setting information as information regarding a transmission timing of a downlink reference signal (DL-RS) to the relay station R.

In Step S204, the base station BS transmits the DL-RS in each $b_R$ at the transmission timing designated by the notification. The relay station R receives the DL-RS in each $b_R$ at the reception timing designated by the notification. The relay station R measures $P_{R,RX}^{BS-R}(b_R)$ which is reception power (RSRP) based on the DL-RS.

In Step S205, the base station BS reports information related to $\Delta P_{TX}^{UE,R}$, $\Delta P_{TX}^{UE(R),R}$, $\Delta P_{TX}^{BS,R}$, and the like to the relay station R. Note that this report may be performed simultaneously with the transmission of the DL-RS in Step S204. The derivation of $\Delta P_{TX}^{UE,R}$ and $\Delta P_{TX}^{UE(R),R}$ in the control apparatus is as described above for the first control sequence.

In Step S206, the relay station R selects resource blocks $b_{R \to UE(R)}$ and $b_{R \to BS}$ of the relay line that minimize interference with other terminal stations UE having the same communication timing. A specific selection method will be described later in detail. In a case where the selection cannot be made (appropriate $b_{R \to UE(R)}$ and $b_{R \to BS}$ are not found), the relay station R may report the fact to the control apparatus. The control apparatus that has received the report may reallocate the set of relay candidate RBs (determine another set) and return to Step S201.

In Step S207, the relay station R notifies the base station BS/control apparatus of $b_{R \to BS}$.

In Step S208, the relay station R notifies the base station BS/control apparatus/terminal station UE(R) of $b_{R \to UE(R)}$.

In Step S211, the control apparatus determines necessity or unnecessity of reselection based on a communication result/communication quality of the non-regenerative relay acquired via the base station BS. Note that the relay station R may acquire the communication result/communication quality of the non-regenerative relay, and the relay station R may determine necessity or unnecessity of reselection. In a case where it is determined that reselection is necessary, the relay station R may provide an instruction to perform reselection to the control apparatus.

[Method for Selecting Resource Blocks $b_{R \to UE(R)}$ and $b_{R \to BS}$ of Relay Line]

In the selection, Equation 7 below may be used instead of Equation 3, and the other parts may be similar to those in the first control sequence.
[Math. 4]

$$
\begin{aligned}
i_{R \to BS}&(b|b_{R \to BS}) \\
&= P_{TX}^{R}(b_{R \to BS}) + D_R\big(\varDelta f(b, b_{R \to BS})\big) - L_{R \to BS}(b_{R \to BS}) \\
&= P_{BS,RX}^{R \to BS}(b_{R \to BS}) + D_R\big(\varDelta f(b, b_{R \to BS})\big) \\
&= P_{R,RX}^{BS \to R}(b_{R \to BS}) + \varDelta P_{TX}^{BS,R} + D_R\big(\varDelta f(b, b_{R \to BS})\big) \ldots \text{(Equation 7)}
\end{aligned}
$$

Here, $\Delta P_{TX}^{BS,R}$ is a transmission power difference (= $P_{TX}^{R}$ - $P_{TX}^{BS}$) between the relay station R and the base station BS. The control apparatus may grasp $P_{TX}^{R}$ and $P_{TX}^{BS}$ in advance, or $P_{TX}^{R}$ and $P_{TX}^{BS}$ may be reported from the relay station R and the base station BS, respectively, and the control apparatus can calculate $\Delta P_{TX}^{BS,R}$.

[Parameters of Restriction]

In the restriction, Equation 8 below may be employed in regard to $\gamma_{BS \to R}(b_{BS \to R})$ of Equation 5, and other parts may be similar to those in the first control sequence.
[Math. 5]

$$
\begin{aligned}
\gamma_{BS \to R}(b_{BS \to R}) &= P_{BS,RX}^{R \to BS}(b_{BS \to R}) - P_{R,N} \\
&= P_{R,RX}^{BS \to R}(b_{BS \to R}) - \varDelta P_{TX}^{BS,R} - P_{R,N} \ldots \text{(Equation 8)}
\end{aligned}
$$

According to the second control flow described above, the relay station can suitably select the relay frequency of the non-regenerative relay in consideration of interference with other terminal stations caused by the non-regenerative relay to a certain terminal station.

<Supplement>

In the present disclosure, a frequency resource of a signal transmitted from the base station 20 to the terminal station 40b and a frequency resource of a non-regenerative relay signal transmitted from the relay station 30 to the terminal station 40a may not overlap or may partially or entirely overlap.

Although one base station and one terminal station UE are assumed as objects to be interfered with in the selection of the relay frequency of the above-described control sequence in the present disclosure, the application range of the present disclosure is not limited thereto. The first and second control sequences described above can also be modified and applied to a case where a non-regenerative relay signal from the relay station interferes with a plurality of base stations/a plurality of terminal stations.

In the present disclosure, an example in which both $b_{R \to UE(R)}$ and $b_{R \to BS}$ are simultaneously selected in the selection of the relay frequency of the control sequence described above has been described, the present disclosure is not limited thereto. For example, only either $b_{R-UE(R)}$ or $b_{R \to BS}$ may be the selection target. In this case, the other one may be a fixed resource, or a previously selected result ((utilization of) a resource) may be maintained.

Although $b \neq \forall b_R$ has been described, the present disclosure is not limited thereto. For example, it is only necessary for the selected result $b_{R \rightarrow UE(R)}/b_{R \rightarrow BS}$ not to match or overlap b ($b \neq B_{R \rightarrow UE}$or $b \neq b_{R \rightarrow BS}$).

Although an example in which the selection of the relay frequency of the control sequence described above is controlled based on the SINR has been described, the present disclosure is not limited thereto. Note that the SINR of the above-described control sequence may be interchangeably read with any of arbitrary reception power (for example, reference signal received power (RSRP)), reception quality (for example, reference signal received quality (RSRQ), SINR, SNR), a signal strength (for example, received signal strength indicator (RSSI)), a channel state information reference signal (CSI), a link quality indicator (LQI), and other metrics related to reception power/reception quality/signal strength, or a combination thereof.

In the present disclosure, the measurement result (such as an SINR) may correspond to a measurement result in specific layers (for example, Layer 1 and Layer 3). For example, an arbitrary measurement result may be interchangeably read with a measurement result indicated by adding a layer 1 (L1-), a layer 3 (L3-), or the like.

In the present disclosure, the arbitrary measurement result may be interchangeably read with a resource block (RB), a subcarrier, a resource element, a subband, a resource block group, a physical RB (PRB), a common RB (CRB), a virtual RB (VRB), a resource block set, a frequency band, a bandwidth, a frequency bandwidth, a frequency band, a frequency range, a frequency resource, a frequency domain resource, or the like.

The mathematical expressions indicated in the present disclosure may be interchangeably read with mathematical expressions obtained by applying arbitrary values and given arithmetic operations (for example, addition, subtraction, multiplication, and division) to arbitrary coefficients/variables/terms. In addition, the mathematical expressions indicated in the present disclosure may be interchangeably read with mathematical expressions obtained by deleting arbitrary terms.

In the present disclosure, the measurement in the base station/relay station/terminal station may be performed based on at least one of a reference signal, a synchronization signal (SS), and a channel. In the present disclosure, a measurement at the base station/relay station/terminal station may be performed (a reference signal/synchronization signal/channel for measurement may also be transmitted) even in a case where the non-regenerative relay is stopped/ended.

As a reference signal, a downlink reference signal (DL-RS), an uplink reference signal (UL-RS), or the like may be used.

The uplink channel may be a physical uplink shared channel (PUSCH), a physical uplink control channel (PUCCH), a physical random access channel (PRACH), or the like.

The downlink channel may be a physical downlink shared channel (PDSCH), a physical downlink control channel (PDCCH), a physical broadcast channel (PBCH), or the like.

The DL-RS may be a channel state information reference signal (CSI-RS) a demodulation reference signal (DMRS), a positioning reference signal (PRS), a phase tracking reference signal (PTRS), a cell-specific reference signal (CRS), or the like.

Note that the CSI-RS may be interchangeably read with a non-zero power (NZP) CSI-RS, an NZP CSI-RS for interference measurement, CSI-interference measurement (IM), zero power (ZP) CSI-RS, and the like.

The UL-RS may be a measurement reference signal (sounding reference signal (SRS)), a demodulation reference signal (DMRS), PRS, PTRS, or the like.

Note that the DMRS may be referred to as a user terminal (UE)-specific reference signal, and a different DMRS may be used for each channel (for example, PUSCH DMRS, PUCCH DMRS, PDSCH DMRS, PDCCH DMRS, PBCH DMRS, or the like may be used.).

The synchronization signal may be, for example, at least one of a primary synchronization signal (PSS) and a secondary synchronization signal (SSS). The signal block including the SS (PSS, SSS) and the PBCH (and the PBCH DMRS) may be referred to as an SS/PBCH block, an SS block (SSB), or the like. Note that the SS, the SSB, and the like may also be referred to as reference signals.

(Concerning Application of Each Embodiment)

At least one of the above-described embodiments may be applied in a case where a specific condition is satisfied. The specific condition may be defined in a standard, or may be provided as a notification by an arbitrary apparatus by using higher layer signaling/physical layer signaling.

In addition, at least one of the above-described embodiments may be applied in a case where arbitrary apparatus configures/activates/is triggered by specific information related to the above-described embodiments (or performing operations of the above-described embodiments) by higher layer signaling/physical layer signaling. For example, the specific information may be information indicating that the selection control of the relay frequency (based on the SINR) is enabled, arbitrary RRC parameters for a specific release (for example, Rel.18/19), and the like.

<Modifications>

Note that the terms described in the present disclosure and the terms necessary for understanding the present disclosure may be replaced with terms having the same or similar meanings.

In the present disclosure, terms such as an apparatus, a circuit, an apparatus, a section, a unit, and the like can be interchangeably read.

The information, parameters, and the like described in the present disclosure may be represented by using absolute values, may be represented by using relative values with respect to given values, or may be represented by using other corresponding information. For example, the radio resource may be indicated by a given index.

The names used for the parameters and the like in the present disclosure are not limited names in any respect. In addition, mathematical expressions and the like using these parameters may be different from those explicitly disclosed in the present disclosure.

The information, signals, and the like described in the present disclosure may be represented using any of a variety of different techniques. For example, data, orders, commands, information, signals, bits, symbols, chips, and the like that may be mentioned throughout the above description may be represented by voltages, currents, electromagnetic waves, magnetic fields or particles, optical fields or photons, or any combination thereof.

The input/output information, signals, and the like may be saved in a specific location (for example, in a memory) or may be managed using a management table. The input/output information, signals, and the like may be overwritten, updated, or added. The output information, signals, and the like may be deleted. The input information, signals, and the like may be transmitted to other apparatuses.

Arbitrary information described in the present disclosure (for example, information regarding arbitrary parameters/variables) may be provided as a notification between arbitrary apparatuses in the present disclosure. Furthermore, in the present disclosure, a notification of information is not limited to those in the aspects/embodiments described in the present disclosure and may be performed by using other methods.

For example, the notification of information in the present disclosure may be performed by physical layer signaling (for example, downlink control information (DCI) and uplink control information (UCI)), higher layer signaling (for example, radio resource control (RRC) signaling, broadcast information (a master information block (MIB), a system information block (SIB), and the like), and medium access control (MAC) signaling), signaling of a specific interface (an X2 interface, an S1 interface, an NG interface, and the like), other signals/channels (for example, reference signals), or a combination thereof.

Note that the physical layer signaling may be referred to as Layer 1/Layer 2 (L1/L2) control information (L1/L2 control signal), L1 control information (L1 control signal), or the like. Furthermore, the RRC signaling may be referred to as an RRC message, and may be, for example, an RRC connection setup message, an RRC connection reconfiguration message, or the like. Furthermore, the MAC signaling may be provided as a notification by using, for example, a MAC control element (CE).

Furthermore, a notification of given information (for example, a notification of "being X") is not limited to an explicit notification, and may be performed implicitly (for example, by not providing the notification of the given information or by providing a notification of another piece of information).

The software should be construed broadly to mean orders, order sets, codes, code segments, program codes, programs, subprograms, software modules, applications, software applications, software packages, routines, subroutines, objects, executable files, execution threads, procedures, functions, and the like, irrespective of whether it is referred to as software, firmware, middleware, microcode, hardware description language, or other names.

In addition, software, orders, information, and the like may be transmitted and received via a transmission medium. For example, in a case where software is transmitted from a website, a server, or another remote source using at least either a wired technology (a coaxial cable, an optical fiber cable, a twisted pair, a digital subscriber line (DSL), or the like) or a wireless technology (infrared rays, microwaves, or the like), at least either the wired technology or the wireless technology is included within the definition of the transmission medium.

In the present disclosure, terms such as "base station (BS)", "radio base station", "relay station", "fixed station", "NodeB", "eNB (eNodeB)", "gNB (gNodeB)", "access point", "transmission point (TP)", "reception point (RP)", "transmission and reception point (TRP)", "panel", "cell", "sector", "cell group", "carrier", "component carrier" and the like may be used interchangeably.

In the present disclosure, terms such as "mobile station (MS)", "user terminal", "user equipment (UE)", "terminal" and the like may be used interchangeably.

The arbitrary apparatus in the present disclosure may be an Internet-of-things (IoT) apparatus such as a sensor.

The arbitrary apparatus in the present disclosure may be referred to as a transmission apparatus, a reception apparatus, a wireless communication apparatus, or the like. The arbitrary apparatus in the present disclosure may be an apparatus mounted on a moving object that is a movable object, a moving object itself, or the like. The moving object includes, for example, a vehicle, a transport vehicle, an automobile, a motorcycle, a bicycle, a connected car, a excavator, a bulldozer, a wheel loader, a dump truck, a forklift, a train, a bus, a pull car, a human-powered vehicle, a ship and other watercraft, an airplane, a rocket, an artificial satellite, a drone, a multicopter, a quadricopter, a balloon, and objects mounted thereon, and is not limited thereto. Furthermore, the moving object may autonomously travel/be automatically driven.

Each aspect/embodiment described in the present disclosure may be used alone, or may be used in combination, or may be switched and used in accordance with execution. In addition, the orders of the processing procedures, sequences, flowcharts, and the like of each aspect/embodiment described in the present disclosure may be changed as long as there is no contradiction. For example, elements of various steps have been presented using illustrative orders for methods described in the present disclosure, and the present disclosure is not limited to the presented specific orders.

As used in the present disclosure, the phrase "based on" does not mean "based only on" unless explicitly stated otherwise. In other words, the description "based on" means both "based only on" and "based on at least."

Any reference to elements using designations such as "first", "second", and the like as used in the present disclosure does not generally limit the amount or order of those elements. These designations may be used in the present disclosure as a convenient way to distinguish two or more elements. Thus, reference to the first and second elements does not imply that only the two elements may be employed or that the first element must in any way precede the second element.

The terms "connected", "coupled", or any variation thereof, as used in the present disclosure, mean any direct or indirect connection or coupling among two or more elements, and can include presence of one or more intermediate elements between the two elements "connected" or "coupled" to each other. The coupling or connection between elements may be physical, logical, or a combination thereof. The coupling or connection between elements may be a connection via at least either wired or wireless intervention.

In the present disclosure, the term "A and B are different" may mean "A and B are different from each other". Note that the term may mean that "A and B are different from C". Terms such as "separated", "coupled" and the like may also be interpreted in the same manner as "different".

In a case where the terms "include," "including," and variations thereof are used in the present disclosure, these terms are intended to be inclusive in a manner similar to the term "comprising." Furthermore, the term "or" used in the present disclosure is intended not to be an exclusive OR.

In a case where articles such as a, an, and the in English are added by translation, for example, in the present disclosure, the present disclosure may include cases where nouns following these articles are in a plural form.

In the present disclosure, words related to "decision", "determination", "judgement", "selection", "calculation", "computation", "processing", "derivation", "search", "confirmation", "assumption", "expectation", and the like may be read interchangeably with each other.

In the present disclosure, "equal to or less than", "less than", "equal to or greater than", "greater than", "equal to", or the like may be read interchangeably with each other. In addition, in the present disclosure, words meaning "good", "bad", "large", "small", "high", "low", "early", "late", "wide", "narrow", and the like may be read interchangeably with each other irrespective of positive degrees, comparatives, superlatives. In addition, in the present disclosure, words meaning "good", "bad", "large", "small", "high", "low", "early", "late", "wide", "narrow", and the like may be read interchangeably with each other irrespective of positive degrees, comparatives, superlatives as expressions with "i-th" (i is an arbitrary integer) (For example, "the best" may be mutually interchangeable with "the i-th best").

In the present disclosure, "of", "for", "regarding", "related to", "associated with", and the like may be read interchangeably with each other.

Although the invention according to the present disclosure has been described in detail above, it is apparent to those skilled in the art that the invention according to the present disclosure is not limited to the embodiments described in the present disclosure. The description of the present disclosure is for the purpose of illustration and does not impose any restrictive meaning on the invention according to the present disclosure.

<Supplementary Notes>

In the present disclosure, $b_{R \to BS}$ may be referred to as a first frequency resource, $b_{R \to UE(R)}$ may be referred to as a second frequency resource, and b may be referred to as a third frequency resource. In the present disclosure, the condition related to $\gamma_{UE(R) \to BS}(b_{R \to BS}, b_{R \to UE(R)})$ (restriction of the optimization problem) may be referred to as a first condition, and the condition related to $\gamma_{BS \to UE(R)}(b_{BS \to R}, b_{R \to UE(R)})$ (restriction of the optimization problem) may be referred to as a second condition.

The following invention is appended to an embodiment of the present disclosure.

[Supplementary Note 1]

A control apparatus including:

a control unit that selects a first frequency resource and a second frequency resource from frequency resource candidates to minimize interference with communication using a third frequency resource between a base station and a second terminal station in a case where uplink non-regenerative relay communication from a relay station to the base station is performed on the first frequency resource and downlink non-regenerative relay communication from the relay station to a first terminal station is performed on the second frequency resource; and
a communication unit that transmits information related to the selected first frequency resource to the relay station and transmits information related to the selected second frequency resource to the first terminal station.

[Supplementary Note 2]

The control apparatus according to Supplementary Note 1, in which the control unit calculates the interference based on reception power of the base station in the uplink non-regenerative relay communication on the first frequency resource, an interference level based on a difference between the third frequency resource and the first frequency resource, reception power of the first terminal station in the downlink non-regenerative relay communication on the second frequency resource, and an interference level based on a difference between the third frequency resource and the second frequency resource.

[Supplementary Note 3]

The control apparatus according to Supplementary Note 1 or 2, in which the control unit minimizes the interference based on a restriction that a first condition related to a reception signal-to-interference plus noise power ratio (SINR) of the uplink non-regenerative relay communication is satisfied.

[Supplementary Note 4]

The control apparatus according to any one of Supplementary Notes 1 to 3, in which the control unit minimizes the interference based on a restriction that a second condition related to a reception signal-to-interference plus noise power ratio (SINR) of the downlink non-regenerative relay communication is satisfied.

[Supplementary Note 5]

A relay station including:

a control unit that selects a first frequency resource and a second frequency resource from frequency resource candidates to minimize interference with communication using a third frequency resource between a base station and a second terminal station in a case where uplink non-regenerative relay communication from a relay station to the base station is performed on the first frequency resource and downlink non-regenerative relay communication from the relay station to a first terminal station is performed on the second frequency resource; and
a communication unit that transmits information related to the selected first frequency resource to the base station and transmits information related to the selected second frequency resource to the first terminal station.

[Supplementary Note 6]

The relay station according to Supplementary Note 5, in which the control unit calculates the interference based on reception power of the base station in the uplink non-regenerative relay communication on the first frequency resource, an interference level based on a difference between the third frequency resource and the first frequency resource, reception power of the first terminal station in the downlink non-regenerative relay communication on the second frequency resource, and an interference level based on a difference between the third frequency resource and the second frequency resource.

[Supplementary Note 7]

The relay station according to Supplementary Note 5 or 6, in which the control unit minimizes the interference based on a restriction that a first condition related to a reception signal-to-interference plus noise power ratio (SINR) of the uplink non-regenerative relay communication is satisfied.

[Supplementary Note 8]

The relay station according to any one of Supplementary Notes 5 to 7, in which the control unit minimizes the interference based on a restriction that a second condition related to a reception signal-to-interference plus noise power ratio (SINR) of the downlink non-regenerative relay communication is satisfied.

[Supplementary Note 9]

A control method of a control apparatus including:

selecting a first frequency resource and a second frequency resource from frequency resource candidates to minimize interference with communication using a third frequency resource between a base station and a second terminal station in a case where uplink non-regenerative relay communication from a relay station to the base station is performed on the first frequency resource and downlink non-regenerative relay communication from the relay station to a first terminal station is performed on the second frequency resource; and
transmitting information related to the selected first frequency resource to the relay station and transmitting information related to the selected second frequency resource to the first terminal station.

The present application is based on Japanese Patent Application No. 2023-131051 filed on August 10, 2023. All the contents are included herein.

**Claims**

1. A control apparatus comprising:

a control unit that selects a first frequency resource and a second frequency resource from frequency resource candidates to minimize interference with communication using a third frequency resource between a base station and a second terminal station in a case where uplink non-regenerative relay communication from a relay station to the base station is performed on the first frequency resource and downlink non-regenerative relay communication from the relay station to a first terminal station is performed on the second frequency resource; and
a communication unit that transmits information related to the selected first frequency resource to the relay station and transmits information related to the selected second frequency resource to the first terminal station.

2. The control apparatus according to claim 1, wherein the control unit calculates the interference based on reception power of the base station in the uplink non-regenerative relay communication on the first frequency resource, an interference level based on a difference between the third frequency resource and the first frequency resource, reception power of the first terminal station in the downlink non-regenerative relay communication on the second frequency resource, and an interference level based on a difference between the third frequency resource and the second frequency resource.

3. The control apparatus according to claim 1 or 2, wherein the control unit minimizes the interference based on a restriction that a first condition related to a reception signal-to-interference plus noise power ratio (SINR) of the uplink non-regenerative relay communication is satisfied.

4. The control apparatus according to claim 1 or 2, wherein the control unit minimizes the interference based on a restriction that a second condition related to a reception signal-to-interference plus noise power ratio (SINR) of the downlink non-regenerative relay communication is satisfied.

5. A relay station comprising:

a control unit that selects a first frequency resource and a second frequency resource from frequency resource candidates to minimize interference with communication using a third frequency resource between a base station and a second terminal station in a case where uplink non-regenerative relay communication from a relay station to the base station is performed on the first frequency resource and downlink non-regenerative relay communication from the relay station to a first terminal station is performed on the second frequency resource; and
a communication unit that transmits information related to the selected first frequency resource to the base station and transmits information related to the selected second frequency resource to the first terminal station.

6. The relay station according to claim 5, wherein the control unit calculates the interference based on reception power of the base station in the uplink non-regenerative relay communication on the first frequency resource, an interference level based on a difference between the third frequency resource and the first frequency resource, reception power of the first terminal station in the downlink non-regenerative relay communication on the second frequency resource, and an interference level based on a difference between the third frequency resource and the second frequency resource.

7. The relay station according to claim 5 or 6, wherein the control unit minimizes the interference based on a restriction that a first condition related to a reception signal-to-interference plus noise power ratio (SINR) of the uplink non-regenerative relay communication is satisfied.

8. The relay station according to claim 5 or 6, wherein the control unit minimizes the interference based on a restriction that a second condition related to a reception signal-to-interference plus noise power ratio (SINR) of the downlink non-regenerative relay communication is satisfied.

9. A control method of a control apparatus comprising:

selecting a first frequency resource and a second frequency resource from frequency resource candidates to minimize interference with communication using a third frequency resource between a base station and a second terminal station in a case where uplink non-regenerative relay communication from a relay station to the base station is performed on the first frequency resource and downlink non-regenerative relay communication from the relay station to a first terminal station is performed on the second frequency resource; and
transmitting information related to the selected first frequency resource to the relay station and transmitting information related to the selected second frequency resource to the first terminal station.

FIG. 1

CONTROL APPARATUS 10 (/BASE STATION 20/RELAY STATION 30/TERMINAL STATION 40)

110(/210/310/410)

CONTROL UNIT

120(/220/320/420)

COMMUNICATION UNIT

130(/230/330/430)

INPUT/OUTPUT UNIT

140(/240/340/440)

STORAGE UNIT

FIG. 2

CONTROL APPARATUS10 (/BASE STATION 20/RELAY STATION 30/TERMINAL STATION 40)

510

520 RF CIRCUIT

530 PROCESSOR

540 NETWORK INTERFACE

550 INPUT DEVICE/ OUTPUT DEVICE

560 MEMORY

570 STORAGE

FIG. 3

FIG. 4A

BASE STATION 20

510

520

530

RF CIRCUIT

PROCESSOR

FIG. 4B

DISTRIBUTED BASE STATION 20a

CENTRAL BASE STATION 20b

510

520

530

RF CIRCUIT

PROCESSOR

FIG. 5A

20

BASE
STATION

30

RELAY
STATION

40 (40a)

TERMINAL
STATION

DOWNLINK
SIGNAL

40 (40b)

TERMINAL
STATION

FIG. 5B

POWER LEVEL

40b

RECEPTION
SINR OF 40b

NOISE LEVEL

FREQUENCY

FIG. 5C

20

BASE
STATION

DOWNLINK
SIGNAL

30

RELAY
STATION

NON-
REGENERATIVE
RELAY
SIGNAL

40 (40a)

TERMINAL
STATION

INTERFERENCE

DOWNLINK
SIGNAL

40 (40b)

TERMINAL
STATION

FIG. 5D

POWER LEVEL

40b

40a

INTERFERENCE
LEVEL OF NON-
REGENERATIVE
RELAY SIGNAL

RECEPTION
SINR OF 40b

NOISE LEVEL

FREQUENCY

FIG. 6A

FREQUENCY BAND #1

POWER LEVEL

40b    40a

REQUIRED SINR OF 40b    RECEPTION SINR OF 40b

INTERFERENCE LEVEL OF NON-REGENERATIVE RELAY SIGNAL

NOISE LEVEL

FREQUENCY

NON-REGENERATIVE RELAY SIGNAL CANNOT BE USED

FIG. 6B

FREQUENCY BAND #2

POWER LEVEL

40b    40a

REQUIRED SINR OF 40b    RECEPTION SINR OF 40b

INTERFERENCE LEVEL OF NON-REGENERATIVE RELAY SIGNAL

NOISE LEVEL

FREQUENCY

NON-REGENERATIVE RELAY SIGNAL CAN BE USED

CONTROL APPARATUS    BASE STATION BS    RELAY STATION R    TERMINAL STATION UE(R)    TERMINAL STATION UE

S101:PROVIDE NOTIFICATION OF RELAY CANDIDATE RB INFORMATION AND RS SETTING INFORMATION

MEASURE RECEPTION POWER OF UPLINK RS OF UE    S102

MEASURE RECEPTION POWER OF UPLINK RS OF UE(R)    S103

MEASURE RECEPTION POWER OF UPLINK RS OF R    S104

S105: REPORT RECEPTION POWER IN STEPS S102 AND S103

S106

SELECT RESOURCE BLOCKS $b_{R \to UE(R)}$ AND $b_{R \to BS}$ OF RELAY LINE THAT MINIMIZES INTERFERENCE

S107: PROVIDE NOTIFICATION OF $b_{R \to BS}$

S108: PROVIDE NOTIFICATION OF $b_{R \to UE(R)}$

S109: PERFORM DOWNLINK NON-REGENERATIVE RELAY

S110: PERFORM UPLINK NON-REGENERATIVE RELAY

S111

DETERMINE NECESSITY OR UNNECESSITY OF RESELECTION BASED ON COMMUNICATION RESULT/ COMMUNICATION QUALITY

FIG. 7

FIG. 8

| CONTROL APPARATUS | BASE STATION BS | RELAY STATION R | TERMINAL STATION UE(R) | TERMINAL STATION UE |
|---|---|---|---|---|

S201: PROVIDE NOTIFICATION OF RELAY CANDIDATE RB INFORMATION AND RS SETTING INFORMATION

MEASURE RECEPTION POWER OF UPLINK RS OF UE — S202

MEASURE RECEPTION POWER OF UPLINK RS OF UE(R) — S203

S204 — MEASURE RECEPTION POWER OF DOWNLINK RS OF BS

S205: PROVIDE NOTIFICATION OF $\Delta P_{TX}^{UE,R}$, $\Delta P_{TX}^{UE(R),R}$

S206 — SELECT RESOURCE BLOCKS $b_{R \to UE(R)}$ AND $b_{R \to BS}$ OF RELAY LINE THAT MINIMIZES INTERFERENCE

S207: PROVIDE NOTIFICATION OF $b_{R \to BS}$

S208: PROVIDE NOTIFICATION OF $b_{R \to UE(R)}$

S209: PERFORM DOWNLINK NON-REGENERATIVE RELAY

S210: PERFORM UPLINK NON-REGENERATIVE RELAY

S211 — DETERMINE NECESSITY OR UNNECESSITY IF RESELECTION BASED ON COMMUNICATION RESULT/ COMMUNICATION QUALITY

FIG. 9

## INTERNATIONAL SEARCH REPORT

| International application No. |
|---|
| **PCT/JP2024/028547** |

| A. | CLASSIFICATION OF SUBJECT MATTER |
|---|---|

*H04W 72/54*(2023.01)i; *H04W 16/26*(2009.01)i; *H04W 72/0453*(2023.01)i
FI:  H04W72/54; H04W16/26; H04W72/0453

According to International Patent Classification (IPC) or to both national classification and IPC

| B. | FIELDS SEARCHED |
|---|---|

Minimum documentation searched (classification system followed by classification symbols)

H04W72/54; H04W16/26; H04W72/0453

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2014-209742 A (APPLE INC.) 06 November 2014 (2014-11-06)<br>entire text, all drawings | 1-9 |
| A | JP 2016-171536 A (SOFTBANK CORP.) 23 September 2016 (2016-09-23)<br>entire text, all drawings | 1-9 |
| A | JP 2015-195598 A (SONY CORPORATION) 05 November 2015 (2015-11-05)<br>entire text, all drawings | 1-9 |

☐ Further documents are listed in the continuation of Box C.  ☑ See patent family annex.

| \* | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 October 2024** | **22 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/028547**

| Patent document cited in search report | | | Publication date (day/month/year) | Patent family member(s) | | | Publication date (day/month/year) |
|---|---|---|---|---|---|---|---|
| JP | 2014-209742 | A | 06 November 2014 | US | 2011/0158156 | A1 | |
| | | | | whole document | | | |
| | | | | WO | 2009/149565 | A1 | |
| | | | | KR | 10-2011-0036574 | A | |
| | | | | CN | 102119570 | A | |
| JP | 2016-171536 | A | 23 September 2016 | US | 2017/0367146 | A1 | |
| | | | | whole document | | | |
| | | | | WO | 2016/147517 | A1 | |
| JP | 2015-195598 | A | 05 November 2015 | US | 2012/0201190 | A1 | |
| | | | | whole document | | | |
| | | | | WO | 2011/036947 | A1 | |
| | | | | EP | 2472956 | A1 | |
| | | | | CN | 102511184 | A | |

Form PCT/ISA/210 (patent family annex) (July 2022)

29

**EP 4 742 804 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023131051 A

**Non-patent literature cited in the description**

- *3GPP TS 38.106 V18.1.0*, June 2023